(19) Europäisches Patentamt
European Patent Office
Office européen des brevets

(11) **EP 4 621 435 A1**

(12) **EUROPEAN PATENT APPLICATION**

(43) Date of publication:
**24.09.2025 Bulletin 2025/39**

(21) Application number: **25165013.1**

(22) Date of filing: **20.03.2025**

(51) International Patent Classification (IPC):
*G01S 7/00* (2006.01)  *G01S 7/02* (2006.01)
*G01S 13/02* (2006.01)  *G01S 13/75* (2006.01)
*G01S 13/76* (2006.01)  *G01S 13/82* (2006.01)
*G01S 13/86* (2006.01)  *G01S 13/87* (2006.01)
*G01S 13/931* (2020.01)  *G01S 3/46* (2006.01)

(52) Cooperative Patent Classification (CPC):
**G01S 13/931; G01S 3/46; G01S 7/006;
G01S 7/027; G01S 13/0209; G01S 13/75;
G01S 13/765; G01S 13/767; G01S 13/825;
G01S 13/86; G01S 13/878;** G01S 2013/9316;
G01S 2013/9329

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.03.2024  IT 202400006316**

(71) Applicants:
• **Bonifacio, Filippo**
  **50134 Firenze (IT)**

• **Salvador, Claudio**
  **50018 Scandicci (IT)**

(72) Inventors:
• **Bonifacio, Filippo**
  **50134 Firenze (IT)**
• **Salvador, Claudio**
  **50018 Scandicci (IT)**

(74) Representative: **Savi, Massimiliano et al
Notarbartolo & Gervasi S.p.A.
Viale Achille Papa, 30
20149 Milano (IT)**

(54) **DYNAMIC DETECTION SYSTEM FOR POSSIBLE COLLISIONS AND IMPACT PROTECTION BARRIER BELONGING TO SAID SYSTEM**

(57)    The invention suggests an impact prevention and protection system in a specific area. It includes a TAG device and/or a first sensor associated with an operator and/or with a vehicle and a second sensor connected to an anti-impact barrier in the area. The TAG devices and sensors employed use the same radio frequencies for transmitting and receiving data. The TAGs have a radio transceiver, an antenna and a controller for managing the transmission. The sensors have three radio transceivers, each with an omnidirectional antenna, and a control unit for calculating the distance and the approach angle of the other sensors and TAGs in the vicinity. This information determines the probability of impact between a moving vehicle and the barrier, and can be used to activate any safety procedures or alarms.

Fig. 1

**Description**

FIELD OF THE INVENTION

The present invention relates to the field of anti-impact protection systems used in the industrial field. In particular, the present invention relates to the field of anti-impact protection systems provided with active safety functions and functions for reducing the risk of potential collisions.

BACKGROUND ART

The diffusion and importance of anti-impact protection systems in the industrial field is known. These systems are adapted to protect infrastructures, vehicles and operators from potential collisions while carrying out normal activities.

Anti-impact protection systems are used, for example to protect determined areas, for example pedestrianized areas, or walls (and any structures associated with these walls), or access gates. Anti-impact protection systems can be used for protecting determined machines, whether they are isolated or arranged in groups or rows.

These protection systems can be made in various shapes and sizes: barriers having different lengths and heights, bollards, guard-rails, gates, aligners, pedestrian railings, height limiters etc.

The function of these protection systems means that they are often destroyed or seriously damaged when they are called to intervene to avoid collisions. In turn, this means lengthy times and substantial repair costs with considerable disadvantages in terms of suspending the operations awaiting completion of the repair.

Availing of a system to prevent collisions with the integrated option of determining the closest movement and position of the moving objects and in general, operating within a certain area of interest, so as to trigger an alarm before a collision occurs, would allow avoiding the described drawbacks, as well as others affecting the systems of the state-of-the-art.

An anti-impact protection system provided with this predictive functionality for collisions could also ensure the possibility of collecting data related to the movements occurring in the immediate surroundings. Advantageously, this data could then be processed and analyzed to obtain useful indications on managing the traffic in the surveilled area, the positioning of the anti-impact systems and also on the operators present in the area.

BRIEF DESCRIPTION OF THE INVENTION

The anti-impact protection system according to the present description allows the dynamic detection of potential collisions between the fixed barriers of the anti-impact protection system and the objects moving within a predetermined area of interest. Furthermore, the aforesaid protection system allows collecting data relating to the movement of vehicles and operators in the event of protection system barriers so as to provide a safety mapping of the area of interest.

The aforesaid anti-impact protection system is based on a sensor in UWB technology(Ultra Wide Band) adapted to detect the position of a TAG or another sensor in UWB technology, within the area of action thereof, utilizing the technique of the angle of arrival (AoA) combined with the distance measurement. Advantageously, said sensor in UWB technology is connectable to the Internet network by means of a wired or wireless connection.

Said sensor in UWB technology, hereinafter simply referred as the sensor, is made so that it can also operate properly against TAGs, and other sensors located at a height equal or close to the height of the sensor itself. This is accomplished by virtue of the use of a plurality of antennas for UWB signals such that the limitation of the detection angle with respect to the z-axis is overcome. The interaction between the sensor and other sensors present in the area of interest and between the sensor and TAG present in the area of interest allows creating the interaction between the barrier and vehicles circulating in the area of interest which can be utilized to create alarm signals in situations predicting a near impact, and also for acting on the controls of the vehicle to try and avoid the impact or make it less dangerous by reducing the speeds of the vehicles involved. This allows using lighter and less expensive barriers since they are called to support impacts with a reduced speed and energy.

We can also allow or prevent the opening of a gate or barrier based on the activity and traffic of vehicles in the vicinity of said gate and said barrier.

Furthermore, the data relating to all interactions recorded between the barrier and vehicle circulating within the area of interest can be post-processed so as to make statistical considerations on the occupation and traffic within the area of interest, from which it is possible to obtain corrections on the existing rules within the aforesaid area of interest (travel direction, maximum speed allowed of the vehicles, positioning of the barriers, etc.).

Furthermore, advantageously, the barrier according to the present description can also comprise geolocation means so that the geographical position of said barrier can be identified with precision. By doing so, advantageously the positions of the other operators and vehicles operating in the zone of interest can be referred to the position of the barrier in order to obtain detailed and georeferenced information on the routes taken by each one. This allows obtaining precious information on the logistic flows characteristic of the different areas of interest, information that can be useful not only for managing safety, but also for organizing and optimizing the activities carried out by the vehicles and operators within the areas of interest. This information can also be shared, saved on remote servers in cloud and provided for post-processing and analyses.

Said sensors positioned on the barriers are preferably fixed, positioned with a certain predefined orientation on the basis of which it is possible to calculate the angle of arrival of a TAG or another approach sensor, and which are geo-localized. When a movable object, fitted with a TAG or sensor, enters the area near the barrier, the fixed sensor on board the barrier calculates the distance and angle in every moment with which it sees the movable object approaching and determines, with precision, the position thereof.

Therefore, the barrier is capable of calculating the position of a movable object fitted with a TAG or a sensor circulating near the barrier, and sending it to the movable object; thereby the movable object becomes aware of the barrier with which it has established the interaction and knows the relative position, distance and travel direction thereof with respect to said barrier.

Furthermore, the movable object is also capable of knowing the absolute position thereof if it is provided with a map on which the positions of the fixed barriers are reported.

If the movable object is a vehicle, for example a forklift truck, provided with a screen (a tablet) for displaying geo-referenced maps, advantageously the map of the zone of activity with the exact positions of the fixed barriers installed in the area can be displayed on board the vehicle, together with the exact position of the vehicle. Depending on the absolute position of the movable object and the safety protocols provided, the intervention method can easily be decided and varied. For example, the speed and/or direction of the forklift truck can be modified, acoustic and/or optical signals can be activated, etc.

By means of the system according to the present description the information obtained about work areas and the movable objects within said work areas can be referred to an absolute position and this allows a universal and uniform management of the data detected, the exchange of information with other applications and with other operators, etc.

According to the described system, the geolocation can be utilized for both receiving info from the object movable within a zone of interest, and modifying the operating profile of the movable objects based on the position thereof. By collecting the data on the interaction between the movable vehicles and fixed barriers installed within a certain work area, also by opportune post-processing, we can establish that in a given area there is a higher level of risk than in other comparable areas. Thus, in response to this determination, it is possible to automatically mark the area at higher risk and, therefore, the maps shared with all the moving objects present in the area, and the related safety criteria can automatically be adapted. In essence, the movable object becomes aware of the position thereof upon interacting with the barrier and sets the operating profile thereof with relation to the geo-referenced maps received, e.g., from a repository situated on a remote cloud.

Finally, the system according to the present description is configured to be easily integrated into pre-existing barriers, also by virtue of the fact that said barriers are often already fitted with cables (for the electric current or communication, such as Ethernet cables, for example). Thereby, the barriers provided with sensors can contribute to creating networks (mesh) which can communicate with one another to cover areas of any extension.

BRIEF DESCRIPTION OF THE FIGURES

Further features and advantages of the invention will become apparent from reading the following detailed description, given by way of a non-limiting example, with the aid of the figures shown in the accompanying drawings, in which:

Fig. 1 shows a preferred embodiment of an anti-impact protection barrier provided with dynamic detection of potential collisions, in which one sensor is associated with the barrier and one TAG is associated with each of the objects moving in the area where the barrier is positioned, in particular with a forklift truck and an operator moving around on foot;

Fig. 2 shows a functional block diagram of the hardware structure of the sensor and TAG system according to the present invention;

Fig. 3 shows a diagram of the arrangement of the antennas in a preferred embodiment of the sensor according to the present invention, and

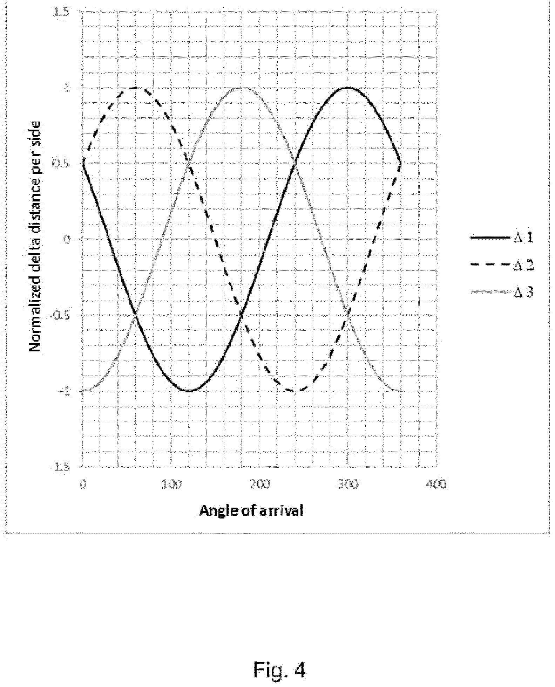

Fig. 4 shows a preferred embodiment of the trio of antennas A1, A2, and A3 by means of mono-conical antennas mounted on a circular ground plane.

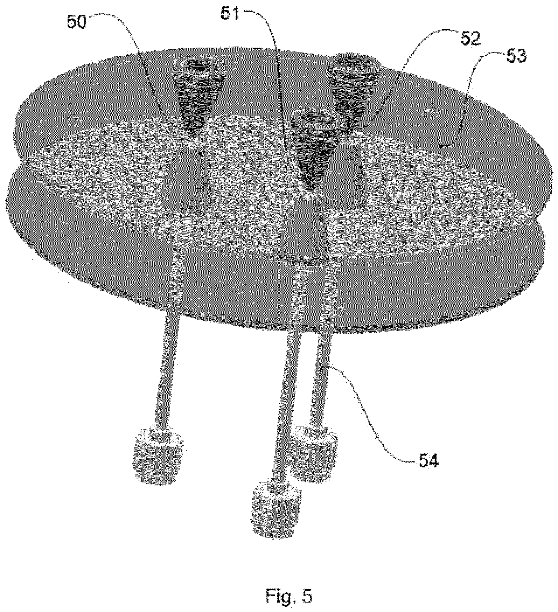

Fig. 5 shows a preferred embodiment of the trio of antennas A1, A2, and A3 by means of biconical antennas interspersed with non-conductive and radio-transparent materials, and

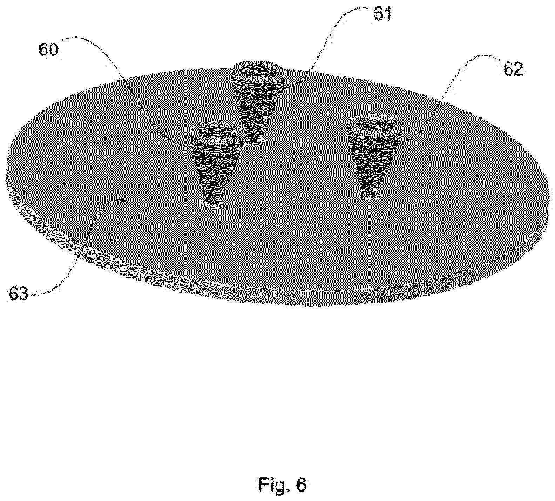

Fig. 6 shows a preferred embodiment of the trio of antennas A1, A2, and A3 by means of mono-conical antennas mounted on a circular ground plane.

The following description of exemplary embodiments relates to the accompanying drawings. The same reference numbers in the various drawings identify the same elements or similar elements. The following detailed description does not limit the invention. The scope of the invention is defined by the appended claims.

## DETAILED DESCRIPTION OF THE INVENTION

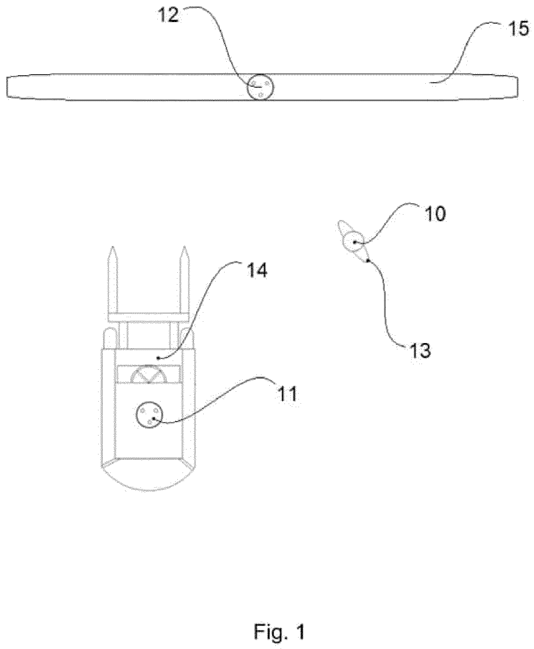

The accompanying Figure 1 shows the case in which a first TAG 10, and a first transceiver, or sensor, 11, are associated with moving objects while a second transceiver, or sensor 12 is associated with a barrier 15 of the fixed or movable type. Said TAG 10 and said sensors 11, 12 can operate, for example, in the field of frequencies between 2 GHz and 10 GHz.

For example, considering an industrial area, said first transceiver or sensor 11 can be associated with a forklift truck 14 operating in the area and said first TAG 10 can be associated with an operator 13 moving around on foot or with other types of vehicles.

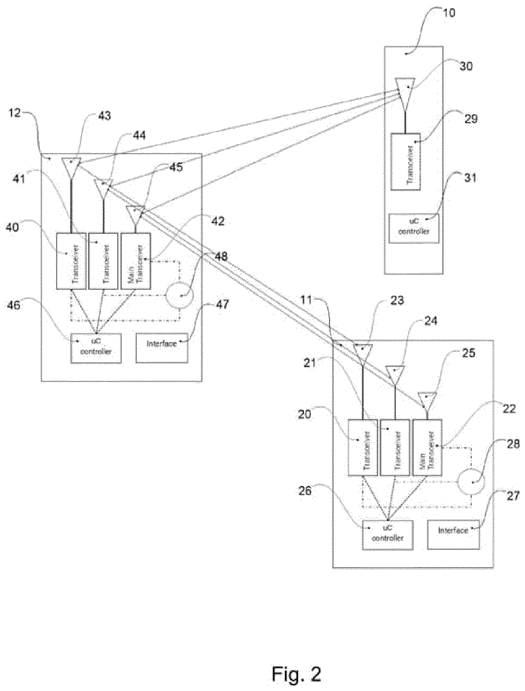

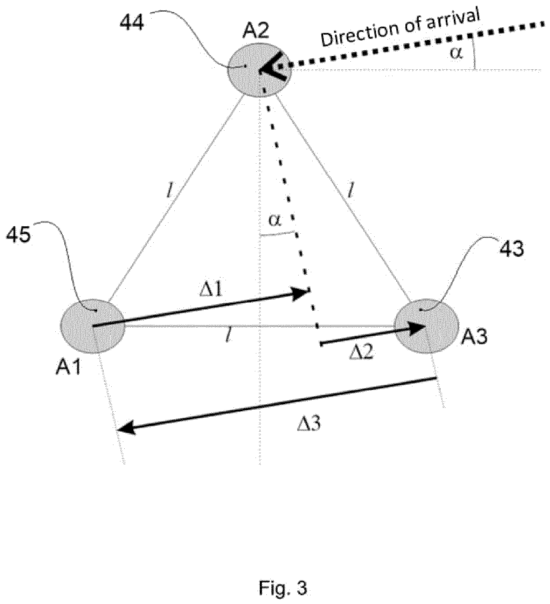

With reference to the accompanying Figs. 2 and 3, in a preferred embodiment of the invention, said first and second sensors 11, 12 each comprise at least three transceivers 20, 21, 22, 40, 41, 42 each associated with an antenna 23, 24, 25, 43, 44, 45. Said transceivers 20, 21, 22, 40, 41, 42 are connected to a control unit 26, 46, configured to appropriately drive said transceivers 20, 21, 22, 40, 41, 42 and to manage at least one possible external interface 27, 47, which can be an interface for connecting to external systems, such as the machinery on which said sensor 11 is installed, for example or a user interface for displaying and configuring the operating parameters of said sensors 11, 12, or again an interface for connecting to a local network or Internet. Advantageously, the control unit 26, 46 can comprise a microcontroller and an associated memory unit adapted to contain program instructions and data.

In particular, said control unit 26, 46 is adapted to regulate the transmission and reception sequences and to process the signals transmitted and received by said TAG 10 or by another sensor in an appropriate manner to calculate the approach or distancing speed thereof. Furthermore, said transceivers 20, 21, 22, 40, 41, 42 are preferably coherent, i.e., they are connected to the same clock source 28, 48.

In a preferred embodiment of the invention, said transceivers 20, 21, 22, 40, 41, 42 are configured so that one is the main transceiver, adapted to determine the distance from a TAG or from another sensor, while the other two transceivers are adapted to measure the related step with respect to said main transceiver.

Said TAG 10 comprises at least one transceiver 29, an antenna 30, and a controller 31 configured to appropriately drive said transceiver 29 to manage the transmission and reception sequences, in particular towards said sensors 11, 12. Said TAG 10 preferably further comprises a supply battery so that it can also be worn by an operator not associated with a vehicle.

During operation of the system according to the invention, said second sensor 12 performs a transceiver exchange with said TAG 10 and/or with said first sensor 11 to determine the distance thereof employing known techniques, e.g., based on Ultra-Wide Band signals. Then, using the information connected with the signals received from the TAG 10 and/or from the first sensor 11, the second sensor 12 works to measure the electrical phase of said signals received from the TAG and from the first sensor, and calculate the difference between the measured phases and, based on this difference, the geometric angle of arrival of the signal transmitted by the TAG 10 and/or by the first sensor 11 and then the direction and geometric angle of approach of the TAG 10 and/or of the first sensor 11 to the second sensor 12. Among the known techniques that allow establishing the flight time of an electromagnetic signal and thus the distance between a transmitter and a receiver there are the RTT (*Round Trip Time*) techniques - based on a double transmission, first in one direction and then in the other - or TWR (*Two Way Ranging*) techniques that take advantage of more transmissions between the two transceivers to allow greater immunity to some drifts typical of the electronics used, such as deviation of the frequency references of the two transceivers, for example.

In the present invention, said second sensor 12 takes advantage of one of the receiving radio exchanges, also to determine the geometric angle of arrival of the signal transmitted by the TAG, by virtue of the use of a plurality of antennas 43, 44, 45.

In a preferred embodiment, shown in the accompanying Fig. 3, the second sensor 12 comprises a system of three antennas A1, A2, and A3 arranged at the vertices of an approximately equilateral triangle of side *l*. Considering this set of three antennas arranged in a Cartesian reference system with an axis of abscissae x and an axis of the ordinates y.

Considering the object on which the TAG 10 is arranged (or the object on which the first sensor 11 is arranged), it moves in a direction that is inclined by an angle of arrival $\alpha$ with respect to the x-axis and has a distance *d* from the three receiving antennas, A1, A2 and A3, much greater than *l*.

Thereby, the directions of arrival of the transmitter with respect to each of the three receiver antennas can be considered approximately parallel to one another.

The path difference of the signals transmitted by the transmitter further corresponds to an electrical phase difference between the signals received by the three receiving antennas A1, A2, and A3. The electric angle or electrical phase, $\theta$, of the electromagnetic signals received by the three antennas can be expressed by the equation:

$$\theta_n = \Delta_n\ 2\pi\ /\ \lambda$$

where $\lambda$ is the wavelength of the received electromagnetic signal. From this relationship, it is deduced that a convenient way of positioning the receiving antennas is such that the size of the side of the triangle having the three antennas at the vertices is less than or equal to half the wavelength of the electromagnetic signal so that the phase difference between the received signals is always within one round angle.

So, if

$$l = \lambda\ /\ 2$$

and

$$-\pi \leq \theta_n \leq \pi$$

it is possible to connect the electrical phase of the signals received by the receivers to the angle of arrival a of the same signals. Indeed, it is possible to calculate, for each of the related electrical angles, the corresponding difference in the path taken by the signal transmitted by the transmitter:

$$\Delta_n = \theta_n\ \lambda\ /\ 2\pi$$

and then

$$\alpha = arcos\ (-\ \theta_3\ \lambda\ /\ 2\pi\ l)$$

$$\alpha = 30° - arcsin\ (\theta_2\ \lambda\ /\ 2\pi\ l)$$

$$\alpha = arcsin\ (\theta 1\ \lambda\ /\ 2\pi\ l) - 30°.$$

As known from trigonometry, the possible solutions, for $\alpha$, are 2 within a 360° angle for each of the above equations. Then, using at least two of the preceding equations it is possible to determine the sought angle, $\alpha$.

This calculation mode, very simple from a theoretical point of view, has problems related to undesirable effects of interference between the three antennas A1, A2, and A3.

Indeed, in the real case, the mutual proximity of the antennas interferes with the received signal and, for some angles of arrival, causes direct interference applied by each antenna on the path of the signal directed to the other antennas. In the described antenna system, A1, A2, A3, the interference of each antenna on the others is practically always present. For example, such an interference can be the cause of an increase in the phase delay of the signal directed to one antenna if this antenna is obscured by another antenna. In this case, when the electrical phase delay exceeds 180°, there is an antenna on a longer signal travel path - and, therefore, it should have an electrical phase delay - resulting, instead, in an advance, making the data connected to the electrical phase impossible to interpret correctly.

In order to solve this, a reduction is made in the side of the triangle at the vertices of which the antennas are located, i.e., the distance between the three antennas, A1, A2, and A3, is reduced. Thereby, any phase losses due to interference, while not being completely eliminated, become such that they cannot result in misinterpretations of the phase sign. Therefore, it is necessary for the distance between the antennas, $l$, to be such that:

$$l < \lambda\ /\ 2.$$

In a preferred embodiment of the sensor 11, 12 according to the present description, which employs ground plane mono-conical or biconical antennas, the distance $l$ is preferably between $\lambda\ /\ 2$ and $\lambda\ /\ 4$. In particular, by selecting the distance $l$ equal to about 80% of $\lambda\ /\ 2$ (or equal to $2\lambda\ /\ 5$), the uniqueness of the relationship between electric phases and corresponding geometric angles can be ensured.

Despite the above corrections, the electrical phase data, $\theta$ still differs from that theoretically predicted. Indeed, although the uniqueness of the solution has been guaranteed and the phase is limited to 180 degrees, the angles are still distorted by the mutual interference between the antennas. Therefore, it is necessary to compensate for these deformations of the electrical phase so as to correctly solve the angle of arrival, $\alpha$, of the received signal.

One way of making the correction, for example provides using a table showing, for each angle of arrival, $\alpha$, the

expected electrical phase differences $\theta$.

An example is given below:

| Angle of arrival | $\theta_1$ expected | $\theta_2$ expected |
|---|---|---|
| $\alpha_1$ | $\theta_{11}$ | $\theta_{21}$ |
| $\alpha_2$ | $\theta_{12}$ | $\theta_{22}$ |
| $\alpha_3$ | $\theta_{13}$ | $\theta_{23}$ |
| ... | ... | ... |
| $\alpha_k$ | $\theta_{1k}$ | $\theta_{2k}$ |

This table can be compiled experimentally, in the initial set-up step of the system comprising the sensor and the TAG, by measuring, at known angles of arrival of the TAG with respect to the sensor, $\alpha$, the correct electrical phase differences, $\theta$.

Thereby, after measuring a pair of electrical angles:

$\theta_1, \theta_2$

it is possible to proceed with the calculation of a cost function for each possible angle of arrival listed in the table

$$c_k = (\theta_2 - \theta_{2k})^2 + (\theta_1 - \theta_{1k})^2.$$

The index k for which we will have the lower $c_k$ cost will correspond to the angle of arrival, $\alpha_k$, having maximum verisimilitude.

The position data in the plane - obtained from the pair formed by the distance $d$ detected, for example, by means of a UWB system and the angle of arrival, $\alpha$, calculated as described above - when reported in polar coordinates on the plane, has different errors with respect to the two coordinates, said coordinates being calculated by different techniques.

Indeed, the distance is calculated, for example, as said, with UWB technology based on the flight time measurement and is affected by an error expressible in absolute length terms.

Angle measurements, on the other hand, have an error that can clearly be expressed in terms of angle amplitude instead of distance and is quantitatively different from the error affecting the distance measurement because the phase difference on the trio of receiving antennas, A1, A2, and A3 is measured to estimate the angle of arrival instead of the flight time from the transmitter.

While the position error due to the distance measurement is independent of the distance, the angular error is solved in an error, in terms of position, which increases as the distance grows, this error being equal to the product of the angular error for the distance. In practice, it is as if the angular error were solved, in terms of position, in a displacement along an arc of a circle and thus in a "dummy" tangential movement.

Substantially, the error on the geometric angle measurement can be likened to a tangential velocity component - which is not actually present - and as such it can be filtered out and eliminated.

Thus, a filtering is applied, which is designed to limit the aforesaid "dummy" tangential velocity so as to make the determined trajectories closer to the real ones. In essence, the angle error is corrected by limiting the tangential displacement in the time unit while not acting on the radial velocity.

In detail, we consider having a series of n measurements made on the distance and on the electrical phase of the signal exchanged between the second sensor 12 and the TAG 10 or the first sensor 11.

Therefore, each measurement is characterized by two parameters: the measured distance and the measured angle of arrival:

$d_i, \alpha_i$

where the index "$i$" refers to the i-th point in the time sequence of the measurements taken, detected at time instant $t_i$ by the sensor, on the electromagnetic signal transmitted by the TAG (or by the first sensor), i.e., in other words, at the i-th measurement of the spatial position of the TAG (or of the first sensor).

The angle $\alpha_{i\_s}$ is the angle related to the instant "$i$" once the filtering operation has been completed.

For the purposes of the algorithm, we assume that at the initial instant with i = 0 the filtered angle coincides with the measured angle.

$$\alpha_{0\_s} = \alpha_0$$

For each point i ≥ 1, an estimated tangential velocity $v_{ti}$ is calculated.

For example, the calculation of the above tangential velocity can be made based on the equation:

$$v_{ti} = (\alpha_i - \alpha_{i-1\_s})\, d_i$$

where $\alpha_{i-1\_s}$ is the angle obtained from the preceding measurement and subjected to filtering.

Therefore, the aforesaid filtering allows calculating a filtered geometric angle , $\alpha_{i\_s}$, based on the calculated value of the tangential velocity, $v_{ti}$, and an acceptable maximum value of the tangential velocity, $v_{tmax}$. For example, the value of said filtered geometric angle can be calculated as follows:

$$\alpha_{i\_s} = \alpha_i \qquad\qquad \text{if } |\,v_{ti}\,| \le |\,v_{tmax}\,|;$$

$$\alpha_{i\_s} = \alpha_{i-1\_s} + K \qquad\qquad \text{if } |\,v_{ti}\,| > |\,v_{tmax}\,|;$$

where K can, for example, be defined as follows:

$$K = [|v_{tmax}|\,(t_i - t_{i-1})\,/\,d_i]\, sgn(v_{ti})$$

With the application of this tangential filtering, we can therefore limit the movement on the arc centered in the second sensor 12 and passing through the TAG 10 (or through the first sensor 11), thus reducing the noise due to the inaccuracy of the measurement of the angle of arrival.

Knowing the position and evolution of the relative position between two objects, such as a moving vehicle or machine and a barrier, or a barrier and a person moving in the same area, also allows knowing the relative velocity between the two objects. Knowing such a velocity, together with the location, thus allows making the behavior of the detection systems adaptive so that they can provide alarms that are produced more intelligently than by simply detecting the exceeding of a given distance threshold.

Indeed, the fact that a target is at a given distance can or cannot result in a dangerous situation according to whether said target is approaching or moving away. The relative position in terms of the angle between the two potential colliders also influences the actual dangerousness of the detected distance. In fact, if a TAG is detected in a zone where the vehicle or operator with which the TAG is associated cannot go, it is apparent that in this case the alarm distance can be shorter.

The sensors positioned on the barriers are preferably fixed, positioned with a specific predefined orientation that allows calculating the angle of arrival of a TAG or another approach sensor, and which are geo-localized. When a movable object provided with a TAG or a sensor enters the area surrounding the barrier, the fixed sensor mounted on the barrier constantly calculates, according to the previously described methods, the distance and the angle with which the movable object approaches, thus determining the position thereof with precision.

Therefore, the barrier can determine the position of a movable object provided with a TAG or sensor moving near the barrier and transmit it to the movable object; thereby, the movable object is informed of the established interaction with the barrier and knows the relative position, distance and direction of travel thereof with respect to the aforesaid barrier.

Furthermore, the movable object is also capable of knowing the absolute position thereof if it is provided with a map on which the positions of the fixed barriers are reported. If the movable object is a vehicle provided with a screen (such as a tablet, for example) for displaying geo-referenced maps, advantageously the map of the activity zone with the exact positions of the fixed barriers installed in the zone can be displayed on board the vehicle, together with the exact position of the vehicle.

Depending on the absolute position of the movable object and the safety protocols provided, the intervention method can easily be decided and varied. For example, if the movable object is a fork lift truck, based on the interaction with the barrier the speed and/or direction of the fork lift truck can be modified, acoustic and/or optical alarms can be activated. Whereas, if it is an operator on foot and the barrier is a controlled gate, it is possible to allow or block the opening of the gate if the crossing thereof is considered to be dangerous for the operator.

By means of the described system, the information acquired on the work areas and the movable objects therein can be associated with an absolute position. This allows a standardized and universal management of the data collected, facilitating the exchange of information with other applications and operators.

In the context of the described system, geo-localization can be used for both receiving information from the movable object within a zone of interest, and for adapting the behavior of the movable objects based on the position thereof.

By collecting the data on interactions between movable vehicles and fixed barriers installed in a specific work area, it is possible to carry out opportune analyses and post-processing to determine whether an area has a greater level of risk with respect to other similar areas. Based on this evaluation, it is possible to automatically mark the area with a corresponding risk level. Therefore, the maps shared with all the movable objects in the area and the related safety criteria can automatically be updated, immediately implementing the updates of the existing criteria and safety protocols in the area.

**Claims**

1. An impact protection system in an area of interest comprising at least one transceiver device or TAG (10) and/or at least one first transceiver device or sensor (11), associated with an operator (13) or vehicle (14) moving within said area of interest and a second transceiver device or sensor (12) associated with an anti-impact barrier (15) installed within said area of interest, wherein said first sensor device (11), said second sensor device (12) and said TAG device (10) are tuned to the same operational radio frequencies and are adapted to transmit and receive data through a radio-frequency link; wherein said TAG (10) comprises:

   at least one radio-frequency transceiver (29),
   at least one antenna (30) associated with said transceiver (29), and
   a controller (31) configured to opportunely drive said transceiver (29) so as to manage the transmission and reception sequences thereof, wherein said first sensor (11) and said second sensor (12) comprise:

      at least three radio-frequency transceivers (20, 21, 22, 40, 41, 42),
      at least three antennas (23, 24, 25, 43, 44, 45), which are omnidirectional on a plane normal to the axis thereof and each associated with said at least three radio-frequency transceivers (20, 21, 22, 40, 41, 42),
      a control unit (26, 46), configured to drive said transceivers (20, 21, 22, 40, 41, 42)

   wherein the control unit (46) of said second sensor (12) is configured to process the signals received from said TAG (10) and/or from said first sensor (11) so as to determine the distance, d, of said TAG (10) and/or said first sensor (11) with respect to said second sensor (12) and the electrical phase, $\theta$, of the signals received on each of said antennas (43, 44, 45) and further configured to calculate the geometric approach angle, a, of the TAG (10) and/or of the first sensor (11) to the second sensor (12) by processing the electrical phase, $\theta$, of the signals received on said at least three antennas (43, 44, 45).

2. A system according to the preceding claim, wherein the control unit (46) of said second sensor (12) is configured to operate an alarm signal based on the detected value of said distance, d, and/or of said geometric angle, $\alpha$.

3. A system according to one or more of the preceding claims, wherein the control unit (46) of said second sensor (12) is configured to send to the control unit (26) of said first sensor (11) instructions for correcting the motion of the vehicle (14).

4. A system according to one or more of the preceding claims, wherein the control unit (46) of said second sensor (12) is configured to send to the control unit (26) of said first sensor (11) information about the relative position of the vehicle (14) with respect to the barrier (15).

5. A system according to one or more of the preceding claims, wherein said anti-impact barrier (15) comprises geolocation means adapted to determine the geographical position thereof.

6. A system according to one or more of the preceding claims, wherein the radio-frequency link between said first sensor (11) and/or said TAG (10) and said second sensor (12) is of the Ultra-Wide Band, UWB type.

7. A system according to one or more of the preceding claims, wherein said control unit (46) of said second sensor (12) is adapted to determine said distance, d, by calculating the flight time of the signal between said TAG (10) and/or said first sensor (11) and said second sensor (12).

8. A system according to one or more of the preceding claims, wherein said second sensor (12) is configured to measure the distance, d, from said TAG (10) and/or from said sensor (11) by so-called *Round Trip Time, RTT,* techniques or by so-called *Two Way Ranging, TWR,* techniques.

9. A system according to one or more of the preceding claims, wherein said operating radio-frequencies are comprised between 2 GHz and 10 GHz.

10. A system according to one or more of the preceding claims, wherein said at least three antennas (23, 24, 25, 43, 44, 45) have a mutual distance comprised between one-half and one-quarter of the wavelength of the transmitted and received electromagnetic signal.

11. A system according to one or more of the preceding claims, wherein said second sensor (12) is configured to calculate the value of the geometric approach angle, $\alpha$, of the TAG (10) and/or of the first sensor (11) to the second sensor (12) by means of a table, which binds values of geometric angles, $\alpha$, to values of electrical phase, $\theta$, of the electromagnetic signals received on said at least three antennas (43, 44, 45) in the initial tuning step.

12. A system according to one or more of the preceding claims, wherein the antennas (43, 44, 45) of said second sensor (12) are mono-conical antennas (60, 61, 62) mounted on a circular ground plane (63).

13. A system according to one or more of claims 1 to 11, wherein the antennas (43, 44, 45) of said second sensor (12) are bi-conical antennas (50, 51, 52) mounted on a base (53) made of a non-conductive and radio-transparent material.

14. A barrier (15) provided with a sensor device (12) comprising

at least three radio-frequency transceivers (40, 41, 42),
at least three antennas (43, 44, 45), which are omnidirectional on a plane normal to the axis thereof and each associated with said at least three radio-frequency transceivers (40, 41, 42),
a control unit (46), configured to drive said transceivers (40, 41, 42) and an external interface (27), and configured to process the signals received from a TAG (10) and/or a first sensor (11) so as to determine the distance, $d$, of said TAG (10) and/or said first sensor (11) with respect to said second sensor (12) and the electrical phase, $\theta$, of the signals received on each of said antennas (43, 44, 45) and further configured to calculate the geometric approach angle, $\alpha$, of the TAG (10) and/or of the first sensor (11) to the second sensor (12) by processing of the electrical phase, $\theta$, of the signals received on said at least three antennas (43, 44, 45), and wherein said control unit (26) is configured to calculate said distance, $d$, and said geometric approach angle, $\alpha$, so as to determine a probable impact between a vehicle on a collision course and the barrier, and to generate an alarm in the event that the probable impact is determined.

15. A barrier (15) according to claim 14 comprising network connection means.

12 — 15

14

10

11 — 13

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

**Application Number**

EP 25 16 5013

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2020 133784 B3 (SICK AG [DE]) 20 January 2022 (2022-01-20) | 1-9,14, 15 | INV. G01S7/00 |
| Y | * paragraph [0003] * <br> * paragraphs [0020], [0021], [0032] * <br> * paragraph [0162] - paragraph [0254] * <br> * figures 1-3 * | 10-13 | G01S7/02 <br> G01S13/02 <br> G01S13/75 <br> G01S13/76 <br> G01S13/82 |
| Y | WO 2023/233270 A1 (SALVADOR CLAUDIO [IT]; BONIFACIO FILIPPO [IT]) 7 December 2023 (2023-12-07) <br> * page 1, lines 5-10 * <br> * page 8, line 8 - page 9, line 7 * <br> * page 11, lines 25-29 * <br> * page 12, lines 4-12 * <br> * page 17, lines 25-31 * <br> * figures 2, 5, 6 * | 10-13 | G01S13/86 <br> G01S13/87 <br> G01S13/931 <br> G01S3/46 |
| A | DE 10 2021 201782 A1 (CONTINENTAL AUTOMOTIVE TECH GMBH [DE]) 25 August 2022 (2022-08-25) <br> * the whole document * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 14 July 2025 | Hirsch, Stefanie |

EPO FORM 1503 03.82 (P04C01)

## ANNEX TO THE EUROPEAN SEARCH REPORT
## ON EUROPEAN PATENT APPLICATION NO.

EP 25 16 5013

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2025

| Patent document cited in search report | Publication date | Patent family member(s) | | Publication date |
|---|---|---|---|---|
| DE 102020133784 B3 | 20-01-2022 | CN | 114636967 A | 17-06-2022 |
| | | DE | 102020133784 B3 | 20-01-2022 |
| | | US | 2022187444 A1 | 16-06-2022 |
| WO 2023233270 A1 | 07-12-2023 | EP | 4533119 A1 | 09-04-2025 |
| | | US | 2025180735 A1 | 05-06-2025 |
| | | WO | 2023233270 A1 | 07-12-2023 |
| DE 102021201782 A1 | 25-08-2022 | NONE | | |

EPO FORM P0459

For more details about this annex : see Official Journal of the European Patent Office, No. 12/82